# EUROPÄISCHE PATENTANMELDUNG

(11) **EP 4 368 461 A1**
(43) Veröffentlichungstag der Anmeldung: **15.05.2024**
(21) Anmeldenummer: 23205458.5
(22) Anmeldetag: 24.10.2023
(51) Int. Cl.: B60R 25/31, G01S 13/02, G01S 13/931

(54) **VERFAHREN ZUM ÜBERWACHEN EINES KRAFTFAHRZEUGS UND KRAFTFAHRZEUG**

(30) Priorität: 10.11.2022 DE 102022211889
(71) Anmelder: Volkswagen Aktiengesellschaft, 38440 Wolfsburg (DE)
(72) Erfinder: ETTE, Bernd, 38442 Wolfsburg (DE)

(57) **Zusammenfassung**

Die Erfindung betrifft ein Verfahren zum Überwachen eines Kraftfahrzeugs (10) und ein Kraftfahrzeug (10) mit einem Funksystem und einer mit dem Funksystem verbundenen Steuereinheit (12).

Es ist vorgesehen, dass unter Verwendung von empfangenen Impulsantworten mindestens einer UWB-Antenne (14, 16) der Außenbereich des Kraftfahrzeugs (10) auf Personen überwacht wird. Wird eine Person im überwachten Außenbereich (26) ermittelt, so wird ein Diebstahl- und/oder Vandalismus-Schutz des Kraftfahrzeugs (10) aktiviert.

## Beschreibung

Die Erfindung betrifft ein Verfahren zum Überwachen eines Kraftfahrzeugs und ein Kraftfahrzeug mit einem Funksystem und einer mit dem Funksystem verbundenen Steuereinheit, die dazu eingerichtet ist, das hierin beschriebene Verfahren durchzuführen.

Moderne Fahrzeuge umfassen eine Vielzahl von Innen- und Außenbereich-Sensoriken, die für verschiedene Funktionen des Fahrzeugs verwendet werden. Dabei kommen häufig sogar unterschiedliche Technologien zum Einsatz. Zur Realisierung der verschiedenen Funktionen sind in modernen Fahrzeugen daher eine Vielzahl von Steuergeräten eingebaut, die jeweils einzelne der verschiedenen Funktionen umsetzen.

Beispielsweise beschreibt Dokument US 2014/0306799 A1 ein System zum Erkennen eines Eindringlings in der Nähe oder innerhalb eines Fahrzeugs. Für den Fall, dass ein unbefugter Benutzer innerhalb des Fahrzeugs erkannt wird, ergreift das vorgestellte System eine Reihe von Maßnahmen, wie die Benachrichtigung eines oder mehrerer autorisierter Benutzer des Fahrzeugs, die Sperrung des Fahrzeugs, die Benachrichtigung von Notfallpersonal oder Polizei und die Ausgabe eines visuellen oder akustischen Alarms. Zur Umsetzung der Überwachung durch das System werden eine Vielzahl von verschiedenen Sensoren, wie optische Sensoren, Bewegungssensoren, Vitalparametersensoren und dergleichen, benötigt.

Das nachveröffentlichte Stand der Technik Dokument DE 10 2021 207 013 A1 betrifft eine Vermessungseinheit zum Vermessen eines Kraftfahrzeuginnenraums und einer Umgebung eines Kraftfahrzeugs, ein entsprechendes System sowie Verfahren und Computer-Programm. Es ist vorgesehen, dass UWB-Antennen, die schon im Kraftfahrzeug eingebaut sind, für eine Überwachung mitbenutzt werden, um zusätzlich den Außenbereich des Kraftfahrzeugs zu überwachen. Wird eine Person außerhalb des Kraftfahrzeugs mittels Mikroradarmessung der UWB-Antennen erfasst, wird die Berechtigung der Person durch Aktivierung eines keyless entry Systems des Kraftfahrzeugs überprüft. Verfügt die Person nicht über die entsprechende Berechtigung kann eine Warnung an die Person oder den Fahrzeughalter ausgegeben werden, um potenzielle Autodiebe abzuschrecken oder den Fahrzeughalter zu warnen.

Problematisch ist, dass die bekannten Überwachungs-Systeme sehr umfassend und komplex sind. Es wird eine Vielzahl von Sensoriken, Technologien und Steuergeräte benötigt, wodurch die bekannten Systeme fehleranfällig sind. Außerdem wird bei der Überwachung eine hohe Menge an elektrischer Energie benötigt. Insbesondere bei der Umsetzung eines Diebstahlschutzsystems führt ein enormer Energieverbrauch dazu, dass länger geparkte Fahrzeuge mangels verbrauchter elektrischer Energie nicht mehr überwacht werden können.

Um das Energieproblem zu verringern, schlägt Dokument US 2018/0154908 A1 ein intelligentes Überwachungssystem vor. Das intelligente Überwachungssystem arbeitet dabei grundsätzlich in einem intelligenten Schlafmodus, um Energie zu sparen. Erst wenn Unregelmäßigkeiten innerhalb, außerhalb oder in der Umgebung des Fahrzeugs festgestellt werden, startet das Überwachungssystem eine automatische Überwachung und benachrichtigt den Fahrzeughalter.

Obgleich der Stand der Technik bereits Teillösungen im Hinblick auf die Energieprobleme bei Fahrzeugüberwachungssystemen offenbart, besteht weiterhin der Wunsch nach weniger komplexen und energiesparenderen Überwachungssystemen.

Der Erfindung liegt daher nun die Aufgabe zugrunde, ein vereinfachtes und kostengünstigeres Überwachungsverfahren für ein Kraftfahrzeug und ein zum Durchführen des Verfahrens eingerichtetes Kraftfahrzeug bereitzustellen.

Die erfindungsgemäße Aufgabe wird gelöst durch ein Verfahren zum Überwachen eines Kraftfahrzeugs und ein Kraftfahrzeug gemäß den unabhängigen Ansprüchen. Bevorzugte Weiterbildungen sind Gegenstand der jeweils rückbezogenen Unteransprüche.

Ein erster Aspekt betrifft ein Verfahren zum Überwachen eines Kraftfahrzeugs. Das Kraftfahrzeug weist ein Funksystem mit einem Sendeempfänger, mit einer ersten Ultrabreitband-(UWB)-Antenne und mit einer zweiten UWB-Antenne und eine mit dem Funksystem verbundene Steuereinheit auf. Der Sendeempfänger des Funksystems ist insbesondere zum Senden und Empfangen von Signalen in sehr großen Frequenzbereichen, insbesondere in einem Frequenzbereich von 3,1 GHz bis 10,6 GHz, bevorzugt in einem Frequenzbereich von 3,5 GHz bis 9 GHz, besonders bevorzugt in einem Frequenzbereich von 6 GHz bis 8,5 GHz, ausgebildet. Die Sendeleistung der UWB-Pulse ist dabei gering. Die Bandbreite des UWB-Signals beträgt mindestens 500 MHz und der UWB-Sendeempfänger ist bevorzugt zum Senden von Signalen mit einer Sendeleistung zwischen 0,5 mW / -41,3 dBm/MHz ausgebildet. Ferner bevorzugt ist der Sendeempfänger gemäß dem Standard IEEE 802.15.4 (insbesondere den Abschnitten zum UWB PHY Layer) und bevorzugt gemäß dem Standard IEEE 802.15.4z ausgebildet. Durch die Streuung der Signale über derart große Frequenzbereiche stören UWB-Signale andere Funksignale nur minimal. Die UWB-Antennen sind ferner zum Senden und Empfangen von Bluetooth-Funksignalen eingerichtet und das Funksystem ist ferner zum Aufbauen einer Bluetooth-Kommunikation eingerichtet.

Gemäß einem Schritt des erfindungsgemäßen Verfahrens wird das Funksystem zum Senden von UWB-Pulsen und Empfangen von Impulsantworten unter Verwendung von mindestens einer der beiden UWB-Antennen angesteuert. Auf Basis eines Ergebnisses der empfangenden Impulsantworten wird ein Außenbereich des Kraftfahrzeugs auf Personen überwacht.

Aufgrund der zeitlich stark lokalisierten UWB-Pulse ist es möglich, aus empfangenen UWB-Pulsen mit deren sich aus dem Einfluss der Umgebung auf den gesendeten UWB-Puls ergebender Impulsantwort Informationen zu dem Propagationsweg der UWB-Pulse zu extrahieren. Einflüsse der Umgebung basieren auf physikalischen Phänomenen, die den UWB-Puls von seinem geometrisch vorgeschriebenen Weg ablenken, wie beispielsweise Brechung, Beugung, Reflexion oder Dämpfung. Es ist offensichtlich, dass sich die Laufzeiten der Signale oder Signalpakete entlang verschiedener Propagationswege unterscheiden und in Abhängigkeit von der Anwesenheit oder Abwesenheit von Objekten in oder nahe der Propagationswege verändern. Auch die Impulsform der Signale oder Signalpakete wird in Abhängigkeit von der Anwesenheit oder Abwesenheit von Objekten in oder nahe der Propagationswege beeinflusst. Somit lässt sich anhand der Messung von entlang dieser Propagationswege übertragener Signale oder Signalpakete vorteilhaft auf die Anwesenheit oder Abwesenheit von Personen und Objekten in oder nahe der Propagationswege schließen.

Gemäß dem erfindungsgemäßen Verfahren der empfangenen Impulsantworten empfängt die UWB-Antenne, die das UWB-Signal aussendet, auch die Impulsantwort der Umgebung. Insofern wird hierbei ein Echo der abgetasteten Umgebung empfangen. Dieses Echo bildet für gewöhnlich eine Vielzahl von zeitlich aufgelösten Echosignalen ab, die sich in Abhängigkeit von dem Abstand dieser Objekte und/oder Personen zum Sendeempfänger in der Impulsantwort niederschlagen. Durch den Vergleich der Echosignale über zeitlich versetzte UWB-Pulse und deren empfangenen Impulsantworten können Rückschlüsse auf Ortsänderungen der Objekte und/oder Personen im Bezug zum Sendeempfänger getroffen werden. Aus den Ortsänderungen können bevorzugt Bewegungen, besonders bevorzugt Vitalparameter, ermittelt werden, um insbesondere Personen von unbewegten oder sich bewegenden aber vitalparameterlosen Gegenständen abzugrenzen. Die Echosignale können ebenfalls bevorzugt anhand von Amplituden- und/oder Phaseninformationen ermittelt und miteinander verglichen werden. Dadurch ist es vorteilhaft möglich, den Innen- und/oder Außenbereich des Fahrzeugs unter Verwendung von mindestens einer Antenne orts- und zeitaufgelöst abzutasten. Selbstverständlich können auch beide UWB-Antennen oder andere im Fahrzeug verbaute UWB-Antennen das Verfahren der empfangenen Impulsantworten durchführen, um aus verschiedenen Winkeln die den Außen- und/oder Innenbereich des Fahrzeugs orts- und zeitaufgelöst abzutasten. Verständlicherweise umfasst das Funksystem bevorzugt eine Vielzahl von UWB-Antennen, wobei die UWB-Antennen gemäß jeweils gewünschtem zu überwachendem Außenbereich des Kraftfahrzeugs in dem Kraftfahrzeug angeordnet werden. Bevorzugt werden bereits im Kraftfahrzeug vorhandene UWB-Antennen multifunktional genutzt, um Kosten zu sparen.

Je weiter ein Objekt von dem Sendeempfänger weg ist, desto später wird das dem Objekt zugeordnete Echosignal vom Sendeempfänger empfangen. So lässt sich eine Reichweite des Sendeempfängers beschränken, indem ein Empfangen der Impulsantwort nach einer der gewünschten Reichweite entsprechenden Zeit unterbrochen wird und/oder ein neuer UWB-Puls ausgesendet wird. In der Zeit, in welcher der UWB-Puls über den Sendeempfänger ausgesendet wird, ist kein Empfangen der Impulsantwort durch den zum Senden verwendeten Sendeempfänger möglich. Folglich kann der zu überwachende Außenbereich des Kraftfahrzeugs gezielt eingestellt beziehungsweise eingeschränkt werden.

In einem weiteren Schritt des erfindungsgemäßen Verfahrens wird ein Diebstahl- oder Vandalismus-Schutz des Kraftfahrzeugs unter der Voraussetzung aktiviert, dass eine Person im überwachten Außenbereich des Kraftfahrzeugs ermittelt wurde. Mit anderen Worten erfolgt eine fahrzeugseitige Reaktion auf eine unter Verwendung der UWB-Technologie erkannte Person im Außenbereich des Fahrzeugs. Durch die Verwendung der UWB-Technologie kann je nach Anordnung der einzelnen UWB-Antennen ein anderer Außenbereich des Fahrzeugs überwacht werden. Insofern ist das Verfahren zielgenau und kostengünstig umsetzbar. Darüber hinaus können durch die im Fahrzeug angeordneten UWB-Antennen noch weitere Fahrzeugfunktionen in der UWB-Technologie vereint werden. Hierdurch wird die Anzahl an im Kraftfahrzeug verbauten Steuergräten reduziert.

Bevorzugt wird der Außenbereich des Kraftfahrzeugs kontinuierlich überwacht. Kontinuierlich bedeutet im Sinne dieser Offenbarung, dass der Außenbereich des Kraftfahrzeugs in sich periodisch wiederholende Abtastungen mittels Aussenden von UWB-Pulsen und empfangen der Impulsantworten über die UWB-Antenne überwacht wird. Besonders bevorzugt beträgt ein zeitlicher Abstand zwischen den Abtastungen einen Wert im Millisekunden-Bereich von 20 ms bis 500 ms, insbesondere 20 ms bis 100 ms, um eine energiesparende Überwachung zu ermöglichen.

In bevorzugter Ausgestaltung ist vorgesehen, dass beim Aktivieren des Diebstahl- und/oder Vandalismus-Schutzes des Kraftfahrzeugs ein Alarm ausgegeben, eine Zentralverriegelung des Kraftfahrzeugs zum Abschließen des Kraftfahrzeugs angesteuert und/oder eine Abtastrate des Außenbereichs des Kraftfahrzeugs durch das Funksystem erhöht wird. Die Ausgabe des Alarms erfolgt bevorzugt optisch, zum Beispiel mittels Aktivierung der Scheinwerfer und/oder der Innenraumbeleuchtung, akustisch, beispielweise unter Betätigung der Hupe oder durch Abspielen einer Audiodatei, und/oder mittels Kommunikation über eine Kommunikationsschnittstelle des Kraftfahrzeugs, beispielsweise unter Verwendung der vorhandenen UWB-Antennen, mit einem in einer Speichereinheit des Kraftfahrzeugs hinterlegten Nutzer des Kraftfahrzeugs. Die Ausgabe des Alarms dient der Abschreckung eines potentiellen Diebes und der Warnung des Nutzers des Kraftfahrzeugs, während das Ansteuern der Zentralverriegelung die Fahrzeugtüren verriegelt, sofern dies der Fahrer beim Verlassen des Kraftfahrzeugs vergessen haben sollte. Durch die Erhöhung der Abtastrate des Funksystems wird die erfasste Informationsdichte pro Zeiteinheit erhöht, um die Aussagekraft der empfangenen Impulsantworten zu verstärken und das Auftreten von Fehlinterpretationen zu verringern. Situationsbezogen ist somit bevorzugt eine erhöhte Abtastrate des überwachten Außenbereichs des Kraftfahrzeugs im Microsekunden-Bereich, beispielsweise 10 µs bis 1000 µs, vorzugsweise 100 µs bis 500 µs, vorgesehen.

In weiterer bevorzugter Ausgestaltung ist vorgesehen, dass das Aktivieren des Diebstahl- und/oder Vandalismus-Schutzes des Kraftfahrzeugs ferner unter der Voraussetzung erfolgt, dass die im überwachten Außenbereich des Kraftfahrzeugs ermittelte Person an einem Einstiegs- oder Zugriffsbereichs des Kraftfahrzeugs steht oder stehen bleibt. Herkömmliche Diebstahl- und Vandalismus-Situationen haben gemein, dass der Täter zumindest für eine kurze Zeitdauer steht oder stehen bleibt, um die Tat zu vollziehen, beispielsweise in eine offene Fahrzeugtür, Hecklappe oder in ein offenes Fenster zu greifen, das Fahrzeugschloss in der Fahrertür zu knacken oder gewaltsam aufzubrechen und dergleichen. Insofern ist es sinnvoll, den Diebstahl- und/oder Vandalismus-Schutz abhängig von dem Verhalten der ermittelten Person zu aktivieren, um die Anzahl an Falschaktivierungen des Diebstahl- und/oder Vandalismus-Schutzes zu reduzieren. Die Einstiegsbereiche des Kraftfahrzeugs bilden im Wesentlichen die klassischen Fahrzeugtüren, während sich die Zugriffsbereiche auf Fensterbereiche, die Motorhaube, die Heck- oder Kofferraumklappe und dergleichen beziehen.

In weiterer bevorzugter Ausgestaltung ist vorgesehen, dass das Aktivieren des Diebstahl- und/oder Vandalismus-Schutzes des Kraftfahrzeugs ferner unter der Voraussetzung erfolgt, dass die ermittelte Person keine authentifizierte Person ist. Hierdurch kann die Anzahl an Falschaktivierungen des Diebstahl- und/oder Vandalismus-Schutzes reduziert werden. Authentifizierungsmethoden von Personen durch ein Kraftfahrzeug sind grundsätzlich bekannt. Beispielsweise erfolgt die Authentifizierung einer Person mittels Empfangens von Authentifizierungs-Daten der Person über eine Kommunikationsschnittstelle mit dem Kraftfahrzeug. Als Kommunikationstechnologie bietet sich insbesondere eine UWB-Kommunikation über die UWB-Antennen an. Mit anderen Worten kann auf Basis der UWB-Kommunikation eine an das Kraftfahrzeug herannahende Person anhand eines mitgeführten Transponders oder eines mobilen Endgeräts zur Kommunikation mit dem Kraftfahrzeug automatisch authentifiziert werden. Zusätzlich oder alternativ kann eine Authentifizierung mittels biometrischer Erkennungsverfahren erfolgen. Biometrische Erkennungsverfahren sind Verfahren, die eine Person anhand physiologischer Charakteristika, wie Fingerabdruck, Gesicht, Muster der Iris oder dergleichen, oder Verhaltensweisen, wie Stimme, Bewegung, Unterschrift oder dergleichen, automatisch erkennen. Dazu wird der Teilbereich des menschlichen Körpers abgetastet, der für das angewandte biometrische Verfahren benötigt wird. Die Abtastung erfolgt beispielsweise mittels einer Kamera und/oder einem Mikrofon des Kraftfahrzeugs. Ferner können die UWB-Antennen zur Umsetzung einer Gestensteuerung für authentifizierte Personen verwendet werden.

In weiterer bevorzugter Ausgestaltung ist vorgesehen, dass das Überwachen des Außenbereichs des Kraftfahrzeugs auf Personen ferner abhängig von einem Schließzustand der Türen des Kraftfahrzeugs durchgeführt wird. Der Schließzustand ist indikativ für eine offene oder geschlossene Fahrzeugtür. Da der Nutzer des Kraftfahrzeugs die Fahrzeugtür/en nach Abstellen und Verlassen des Kraftfahrzeugs oder nach dem Einsteigen in das Kraftfahrzeugs grundsätzlich schließt, ist es sinnvoll, den Beginn der Überwachung des Außenbereichs selektiv an diesen Umstand zu koppeln, also dann, wenn die Türen des Kraftfahrzeugs geschlossen sind. Somit kann der Energieverbrauch der Überwachung verringert werden. Der Schließzustand der Türen wird bei modernen Fahrzeugen über Sensorsignale von (Beschleunigungs-)Sensoren in den Türen an den Boardcomputer des Kraftfahrzeugs übermittelt. Daher liegen in modernen Fahrzeugen Informationen zu den Schließzuständen der Fahrzeugtüren grundsätzlich vor und können für das erfindungsgemäße Verfahren herangezogen werden. Zusätzlich oder alternativ kann der Schließzustand der Türen aber auch aus den empfangenen Impulsantworten der UWB-Sensoren ermittelt werden. Dadurch können beispielsweise die Sensoren in den Türen eingespart werden.

In weiterer bevorzugter Ausgestaltung ist vorgesehen, dass basierend auf dem Ergebnis der empfangenden Impulsantworten eine Anzahl von Personen in dem Kraftfahrzeug ermittelt wird und das Überwachen des Außenbereichs des Kraftfahrzeugs auf Personen unter der Voraussetzung durchgeführt, dass keine Person im Kraftfahrzeug ist. Eine Person kann beispielsweise dadurch ermittelt werden, dass die empfangene Impulsantwort mit einer Referenz-Impulsantwort verglichen wird. Die Referenz-Impulsantwort ist hierbei die Impulsantwort eines leeren Kraftfahrzeugs, das heißt eines Kraftfahrzeugs ohne Personen im Innenraum. Aus den sich ergebenen Unterschieden zwischen empfangener Impulsantwort und Referenz-Impulsantwort können dann Veränderungen im Innenraum, wie hinzugefügte oder verschobene Objekte und/oder Personen, ermittelt werden. Zur Unterscheidung einer Person von einem (großen) Gegenstand können aus den empfangenen Impulsantworten Bewegungen der Person, wie eine Atmung oder ein Herzschlag, mithin ein Vitalparameter der Person, im zeitlichen Verlauf ermittelt werden. Ergibt sich demnach, dass keine Person in dem Kraftfahrzeug vorhanden ist, so wird das Überwachen des Außenbereichs des Kraftfahrzeugs auf Personen gestartet oder fortgesetzt. Dies bildet den Umstand ab, dass sich ein Täter üblicherweise ein leeres Fahrzeug für seine Tat aussucht. Folglich kann der Energieverbrauch der Überwachung verringert werden. Zusätzlich oder alternativ kann ein Belegungszustand des Kraftfahrzeugs auch unter Verwendung herkömmlicher Sensoren, wie Drucksensoren in den Sitzplätzen oder Innenraum-Kameras, ermittelt werden und zum Starten oder Fortsetzen des Überwachens des Außenbereichs des Kraftfahrzeugs herangezogen werden.

In weiterer bevorzugter Ausgestaltung ist vorgesehen, dass basierend auf dem Ergebnis der empfangenden Impulsantworten ermittelt wird, ob eine oder alle in dem Kraftfahrzeug ermittelten Personen Kinder oder Tiere sind, wobei ein Alarm ausgegeben wird, wenn das oder die Kinder oder Tiere alleine im Kraftfahrzeug sind. Bevorzugt wird der Alarm erst ausgegeben, wenn die Fahrzeugtüren verriegelt wurden. Somit wird das Kraftfahrzeug eine Warnung ausgeben, wenn das oder die ermittelten Kinder oder Tiere im Kraftfahrzeug offensichtlich vergessen und eingesperrt wurden, um eine Kinder- beziehungsweise Tierschutzfunktion zu ermöglichen. Tiere, insbesondere Hunde, Katzen und dergleichen erzeugen zu Kindern ähnliche Impulsantworten, sodass sich eine derartige Unterscheidung teilweise schwierig gestaltet. Dies stellt aber kein Problem dar, da sowohl Tiere als auch Kinder meist nicht in der Lage sind, eine Fahrzeugtür zu öffnen und somit besonders vor einem alleinigen Zurücklassen im Kraftfahrzeug geschützt werden müssen.

In weiterer bevorzugter Ausgestaltung ist vorgesehen, dass basierend auf dem Ergebnis der empfangenden Impulsantworten eine Sitzplatzbelegung des Kraftfahrzeugs ermittelt wird und abhängig von der ermittelten Sitzplatzbelegung eine Innenraumüberwachung durchgeführt wird. Mit anderen Worten wird eine Innenraumüberwachung durchgeführt, wenn zumindest eine Person (oder ein Tier) in dem Innenraum des Kraftfahrzeugs ermittelt wurde. Die Innenraumüberwachung integriert bevorzugt eine Vielzahl von Funktionen, wie eine Sicherheitsgurtwarnung, eine Airbagsteuerung, eine Müdigkeitserkennung des Fahrers, eine Erkennung von Atmungs- und/oder Herzfrequenzen der Personen im Fahrzeug zur Identifikation von Notfällen, einer Fehlnutzungs-Erkennung und/oder dergleichen. Eine Fehlnutzung liegt beispielsweise vor, wenn sich eine Erkennung von gewünschten Funktionen mit ähnlichen Verhalten ergeben, beispielsweise, wenn sich ein Gegenstand in dem Fahrzeug bewegt oder gegenüber einer Referenz-Impulsantwort verschoben detektiert wurde.

In weiterer bevorzugter Ausgestaltung ist vorgesehen, dass ferner ein Ansteuern des Funksystems zum Durchführen eines auf Channel Impulse Response-(CIR-)Messungen basierenden Verfahrens unter Verwendung der ersten UWB-Antenne und der zweiten UWB-Antenne erfolgt und das Überwachen des Außenbereichs des Kraftfahrzeugs auf Personen ferner basierend auf einem Ergebnis der CIR-Messungen erfolgt. Zusätzlich oder alternativ können die hierin genannten auf Basis der empfangenen Impulsantwort umgesetzten Funktionen mittels CIR-Messungen erfolgen.

Vorteilhaft ist es unter Verwendung von (mindestens) zwei UWB-Antennen möglich, die Umgebung mittels der CIR-Messungen ortsaufgelöst abzutasten. Durch mehrfaches Versenden von UWB-Pulsen über eine der Antennen und anhand der durch die andere Antenne empfangenen Impulsantworten können Veränderungen in der Umgebung - beispielsweise ein neu in dem abzutastenden Bereich befindliches Objekt - durch den Vergleich der zeitversetzten Impulsantworten orts- und zeitaufgelöst sichtbar gemacht werden. Auf diese Weise ist die Detektion eines in den abzutastenden Bereich eintretenden Objektes verlässlich möglich. Insbesondere ein besonders bevorzugtes konstantes und/oder repetitives Abtasten der Umgebung mittels CIR-Messungen erlaubt dabei eine entsprechende Überwachung des abzutastenden Bereichs. Vorzugsweise werden die UWB-Antennen abwechselnd zum Empfangen der Impulsantworten und zum Durchführen der CIR-Messungen angesteuert. Die Kombination beider UWB-Technologien erhöht die Aussagekraft der durch das Funksystem getätigten Abtastungen, wodurch das Auftreten von Fehlinterpretationen verringert wird. Folglich kann die Überwachungsqualität und das Auftreten von Fehlaktivierungen des Diebstahl- und/oder Vandalismus-Schutzes des Kraftfahrzeugs verbessert werden.

Die CIR-Messungen beinhalten beispielsweise das Versenden von vordefinierten Signalen oder Signalpaketen (sogenannten Telegrammen) zwischen den (zumindest) zwei UWB-Antennen. Neben einem direkten Propagationsweg des Signals oder der Signalpakete zwischen den UWB-Antennen gibt es eine Vielzahl weiterer Propagationswege, die beispielsweise Reflektionen von Objekten aus dem Innen- oder Außenbereich des Fahrzeugs einschließen. Basierend auf einer ausreichenden Anzahl und/oder einer vorteilhaften Anordnung der UWB-Antennen ermöglichen diese Propagationswege eine Abdeckung von weiten Teilen eines Raums, beispielsweise eines Fahrzeuginnenraums und/oder eines Fahrzeugaußenbereichs. Selbstverständlich können die CIR-Messungen zwischen einer Vielzahl von UWB-Antennen erfolgen, um abhängig von der Anordnung der UWB-Antennen entsprechende Bereiche, insbesondere einen Innenraum und/oder Außenbereich eines Kraftfahrzeugs, abzutasten. Analog zu dem beschriebenen Verfahren der empfangenen Impulsantworten können mittels CIR-Messungen ein oder mehrere Personen in dem Fahrzeug sitzplatzgenau oder-aufgelöst werden. Ebenfalls lassen sich aus den CIR-Messungen Bewegungen der Personen, insbesondere die Brustbewegung einer Atmung und/oder eines Herzschlags der Personen, auflösen.

Ein weiter Aspekt umfasst ein Kraftfahrzeug mit einem Funksystem und einer mit dem Funksystem verbundenen Steuereinheit. Das Funksystem umfasst einen Sendeempfänger mit einer ersten UWB-Antenne und einer zweiten UWB-Antenne. Die UWB-Antennen sind ferner zum Senden und Empfangen von Bluetooth-Funksignalen eingerichtet und das Funksystem ist ferner zum Aufbauen einer Bluetooth-Kommunikation eingerichtet. Die Steuereinheit ist dazu eingerichtet, das hierin beschriebene Verfahren durchzuführen. Die mit dem Verfahren beschriebenen Merkmale und deren Vorteile lassen sich analog mit dem Kraftfahrzeug verwirklichen und sind daher beliebig miteinander kombinierbar.

Die oben genannte Steuereinheit des Kraftfahrzeugs ist bevorzugt durch elektrische oder elektronische Bauteile oder Komponenten (Hardware) oder durch Firmware (ASIC) implementiert. Zusätzlich oder alternativ wird die Funktionalität der Steuereinheit beim Ausführen eines geeigneten Programms (Software) verwirklicht. Ebenfalls bevorzugt ist die Steuereinheit durch eine Kombination von Hardware, Firmware und/oder Software verwirklicht. Beispielsweise sind einzelne Komponenten der Steuereinheit zum Bereitstellen einzelner Funktionalitäten als separat integrierter Schaltkreis ausgebildet oder auf einem gemeinsamen integrierten Schaltkreis angeordnet.

Die einzelnen Komponenten der Steuereinheit sind ferner bevorzugt als ein oder mehrere Prozesse ausgebildet, die auf einem oder mehreren Prozessoren in einem oder mehreren elektronischen Rechengeräten laufen und beim Ausführen von einem oder mehreren Computerprogrammen erzeugt werden. Die Rechengeräte sind dabei bevorzugt dazu ausgebildet, mit anderen Komponenten, beispielsweise einer Zentralverriegelung, einem Motorcontroller, et cetera zusammenzuarbeiten, um die hierin beschriebenen Funktionalitäten zu verwirklichen. Die Anweisungen der Computerprogramme sind dabei bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen, abgelegt sein.

Dem Fachmann ist ferner ersichtlich, dass die Funktionalitäten von mehreren Recheneinheiten (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt vorliegen kann, um die Funktionalität der Steuereinheit zu verwirklichen.

Ein weiterer Aspekt der Erfindung betrifft ein Computerprogramm, umfassend Befehle, die bei der Ausführung des Programms durch einen Computer, wie beispielsweise eine Steuereinheit eines Kraftfahrzeugs aufweisend ein Funksystem mit einem Sendeempfänger, aufweisend eine erste UWB-Antenne und eine zweite UWB-Antenne, diesen veranlassen, das erfindungsgemäße Verfahren, insbesondere ein Verfahren zum Überwachen eines Kraftfahrzeugs, durchzuführen.

Weitere bevorzugte Ausgestaltungen der Erfindung ergeben sich aus den übrigen, in den Unteransprüchen genannten Merkmalen.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines Kraftfahrzeugs gemäß einer Ausführungsform mit sechs UWB-Antennen,
- Figur 2: eine schematische Darstellung eines Kraftfahrzeugs mit sechs UWB-Antennen gemäß einer weiteren Ausführungsform, und
- Figur 3: eine schematische Darstellung eines Verfahrens gemäß einer Durchführungsform.

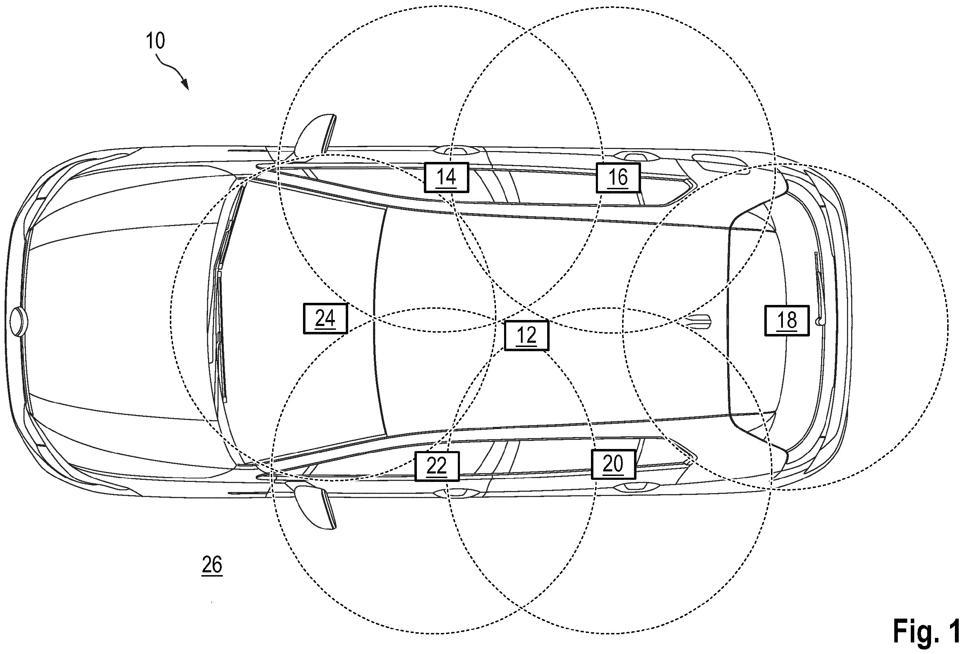

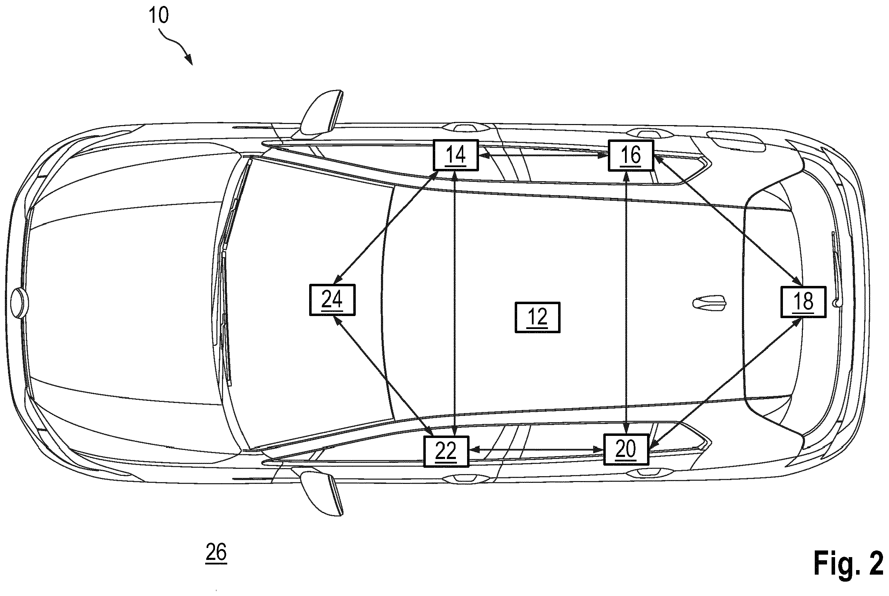

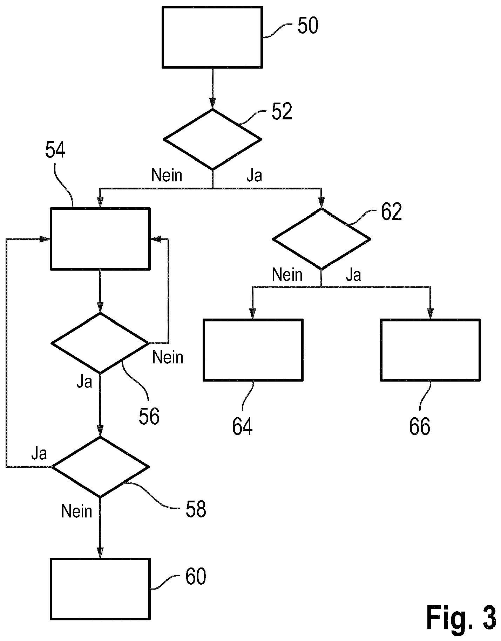

Figuren 1 und 2 zeigen jeweils eine schematische Darstellung eines Kraftfahrzeugs 10 gemäß zwei Ausführungsformen mit jeweils sechs UWB-Antennen 14, 16, 18, 20, 22, 24. Mit Blick auf Figur 3 wird ein Verfahren zum Überwachen des Kraftfahrzeugs 10 gemäß einer Durchführungsform näher erläutert.

Das Kraftfahrzeug 10 umfasst ein Funksystem mit einem Sendeempfänger mit einer ersten bis sechsten UWB-Antenne 14, 16, 18, 20, 22, 24 und eine mit dem Funksystem verbundene Steuereinheit 12. Die Steuereinheit 12 ist insbesondere zur Durchführung des im Zusammenhang mit Figur 3 geschilderten Verfahrens eingerichtet. Fünf der sechs UWB-Antennen 14, 16, 18, 20, 22, 24 verteilen sich auf die fünf Türen des Kraftfahrzeugs 10 und die sechste UWB-Antenne 24 ist im Bereich des Innen-Rückspiegel des Kraftfahrzeus 10 angeordnet. Genauer gesagt sind die erste UWB-Antenne 14 in der Beifahrertür, die zweite UWB-Antenne 16 in der Tür hinter der Beifahrertür, die dritte UWB-Antenne 18 in der Heckklappe, die vierte UWB-Antenne 20 in der Tür hinter der Fahrertür und die fünfte UWB-Antenne 22 in der Fahrertür angeordnet. Die Anzahl und Anordnung der UWB-Antennen 14, 16, 18, 20, 22, 24 ist lediglich exemplarischer Natur und soll dem besseren Verständnis dienen. Die Offenbarung ist nicht demnach auf die gezeigte Anordnung und Anzahl von UWB-Antennen 14, 16, 18, 20, 22, 24 beschränkt. Ferner können bereits im Kraftfahrzeug 10 verbaute UWB-Antennen benutzt werden. Moderne Fahrzeuge weisen teilweise UWB-Antennen auf, die in dem Kraftfahrzeug 10 zwecks schlüssellosem Zugangs verbaut sind. Folglich können die bereits verbauten UWB-Antennen multifunktional verwendet und Kosten gespart werden.

Die in Figur 1 in gestrichelter Linie gezogenen Kreise um die UWB-Antennen 14, 16, 18, 20, 22, 24 stellen eine exemplarische Reichweite einer jeden UWB-Antenne 14, 16, 18, 20, 22, 24 dar, wenn diese jeweils zum Senden von UWB-Pulsen und Empfangen von Impulsantworten angesteuert werden. Eine Reichweite einer jeweiligen UWB-Antenne 14, 16, 18, 20, 22, 24, mit anderen Worten der Radius der beispielhaft gezogenen Kreise, beträgt ein Meter.

Grundsätzlichen lassen sich gute Resultate bei Reichweiten zwischen 0,1 Metern und 1,5 Metern erzielen. Es ist intuitiv dargestellt, dass unter Verwendung der beispielhaft angeordneten sechs UWB-Antennen 14, 16, 18, 20, 22, 24 der Innenraum des Kraftfahrzeugs 10 vollständig und ein Außenbereich 26 des Kraftfahrzeugs 10 zumindest teilweise abgedeckt wird. Die Abdeckung des Außenraums 26 umfasst insbesondere Einstiegs- und Zugriffsbereiche des Kraftfahrzeugs 10, also im Wesentlichen die Bereiche vor den Fahrzeugtüren und der Kofferraumklappe. Es ist verständlich, dass die Reichweiten der UWB-Antennen 14, 16, 18, 20, 22, 24 auch größer (oder kleiner) eingestellt werden können, sodass beispielsweise die gesamte Fahrzeughülle durch die UWB-Antennen 14, 16, 18, 20, 22, 24 abgedeckt sein kann, um beispielsweise die komplette Fahrzeughülle auf Vandalismusschäden überwachen zu können.

Die Ausführungsform des Kraftfahrzeugs 10 gemäß Figur 2 unterscheidet sich von der in Figur 1 dargestellten Ausführungsform lediglich darin, dass die UWB-Antennen 14, 16, 18, 20, 22, 24 nicht zum Senden von UWB-Pulsen und empfangenen der jeweiligen Impulsantworten angesteuert werden, sondern vielmehr zum Durchführen von CI R-Messungen angesteuert werden. Die Pfeile stellen einige der möglichen direkten Propagationspfade zwischen den UWB-Antennen 14, 16, 18, 20, 22, 24 dar. Es ist zu erwähnen, dass aus Gründen der Übersichtlichkeit nicht alle möglichen direkten Propagationspfade zwischen den UWB-Antennen 14, 16, 18, 20, 22, 24 abgebildet sind. Mit anderen Worten ist es offensichtlich, dass die CIR-Messungen auch zwischen anderen, insbesondere allen, UWB-Antennen 14, 16, 18, 20, 22, 24 erfolgen kann, um Informationen zu Personen und Objekten entlang der Propagationswege zwischen den jeweiligen UWB-Antennen 14, 16, 18, 20, 22, 24 zu erhalten. Es ist ferner nicht so, wie es in Figur 2 veranschaulicht wirkt, dass der Außenbereich 26 des Kraftfahrzeugs 10 mit den CIR-Messungen nicht abgetastet werden könne. Vielmehr werden die UWB-Pulse einer einzelnen UWB-Antenne 14, 16, 18, 20, 22, 24 in alle Raumrichtungen ausgesendet, sodass auch die Einflüsse des Außenbereichs 26 den UWB-Puls von seinem geometrisch vorgeschriebenen Weg ablenken, wie beispielsweise durch Brechung, Beugung, Reflexion oder Dämpfung und diese daher durch andere, insbesondere benachbarte, UWB-Antennen 14, 16, 18, 20, 22, 24 empfangen werden. Folglich kann mittelts der CIR-Messungen auch der Außenbereich 26 des Kraftfahrzeugs 10 auf Personen überwacht werden.

Die UWB-Antennen 14, 16, 18, 20, 22, 24 können nicht nur gemäß der in Figur 1 dargestellten Ausführungsform oder gemäß der in Figur 2 abgebildeten Ausführungsform angesteuert werden, sondern vielmehr können die UWB-Antennen 14, 16, 18, 20, 22, 24 auch jeweils abwechselnd gemäß den in den Figuren 1 und 2 dargestellten Ausführungsformen angesteuert werden. Die Kombination der beiden UWB-Technologien (der empfangenen Impulsantwort und der CIR-Messungen) erhöht die Aussagekraft der durch das Funksystem getätigten Abtastungen, wodurch das Auftreten von Fehlinterpretationen weiter verringert wird.

Das Kraftfahrzeug 10 umfasst ferner eine Kommunikationsschnittstelle, die mit der Steuereinheit 12 und dem Funksystem verbunden ist. Eine jede der UWB-Antennen 14, 16, 18, 20, 22, 24 ist bevorzugt in einem Gehäuse angeordnet, welches eine Anzeige aufweist. Die Anzeige und die UWB-Antennen 14, 16, 18, 20, 22, 24 sind bevorzugt oberhalb der Metallkonstruktionen des Kraftfahrzeugs 10, wie den Fahrzeugtüren, hinter den Fahrzeugscheiben angeordnet. Dies hat den Vorteil, dass die Anzeige von außen sichtbar ist und die UWB-Antennen 14, 16, 18, 20, 22, 24 eine bessere Reichweite in den Außenbereich 26 des Kraftfahrzeugs 10 aufweisen.

In einigen Ausführungsformen umfasst das Kraftfahrzeug 10 ferner einen oder eine Vielzahl von Beschleunigungssensoren. Mit dem Beschleunigungssensor können beispielsweise Schließzustände der Fahrzeugtüren oder Vandalismus-Tätigkeiten an dem Kraftfahrzeug 10, insbesondere an Bereichen, die durch die UWB-Messungen nicht abgedeckt sind, erfasst werden. Die UWB-Antennen 14, 16, 18, 20, 22, 24 sind bevorzugt ferner zum Senden und Empfangen von Bluetooth-Funksignalen eingerichtet. Hierbei kann das Funksystem dazu angesteuert werden, eine UWB- oder Bluetooth-Kommunikation mit in der Fahrzeugumgebung vorhandenen Kommunikationsmitteln, wie einem Transponder oder mobilen Endgerät eines Nutzers des Kraftfahrzeugs 10, aufzubauen. Die Bluetooth-Kommunikation erfolgt bevorzugt in dem bekannten Frequenzband zwischen 2,402 GHz und 2,480 GHz. Bevorzugt ist die Bluetooth-Low-Energy-Funktechnologie vorgesehen. Mittels der Kommunikation können Authentifizierungsdaten eines Nutzers des Kraftfahrzeugs 10 an das Kraftfahrzeug 10 übermittelt werden. Ferner können mit Time-of-Flight-Messungen ein Abstand und eine relative Lage des Nutzers zu dem Kraftfahrzeug 10 ermittelt werden.

Figur 3 zeigt eine schematische Darstellung eines Verfahren zum Überwachen des Kraftfahrzeugs 10 gemäß einer Durchführungsform. In einem ersten Verfahrensschritt 50 wird ein Schließzustand der Fahrzeugtüren überprüft. Dies erfolgt beispielsweise unter Verwendung der in den Fahrzeugtüren eingebauten Beschleunigungssensoren. Ergibt die Überprüfung, dass alle Fahrzeugtüren geschlossen wurden, wird ein zweiter Verfahrensschritt 52 durchgeführt.

Im zweiten Verfahrensschritt werden die UWB-Antennen 14, 16, 18, 20, 22, 24 abwechselnd zum Senden von UWB-Pulsen und empfangen der Impulsantworten und zum Durchführen von CIR-Messungen angesteuert. Basierend auf einem Ergebnis der empfangenden Impulsantworten und der CIR-Messungen wird eine Anzahl von Personen in dem Kraftfahrzeug 10 ermittelt. Dies erfolgt bevorzugt mittels eines Vergleichs der empfangenden Impulsantworten mit einer in einem Speicher des Kraftfahrzeugs 10 hinterlegten Referenz-Impulsantwort eines leeren Kraftfahrzeugs 10 und eines Vergleichs der CIR-Messungen mit in dem Speicher des Kraftfahrzeugs 10 hinterlegten Referenz-CIR-Messungen des leeren Kraftfahrzeugs 10. Weisen die Vergleiche Differenzen aus, die nicht auf eine Person, sondern auf einen verschobenen statischen Gegenstand im Kraftfahrzeug 10 zurückzuführen sind, so werden die letzte Impulsantwort als neue Referenz-Impulsantwort und die letzten CIR-Messungen als neue Referenz-CIR-Messungen in dem Speicher hinterlegt.

Wird in dem zweiten Verfahrensschritt 52 ermittelt, dass keine Person in dem Kraftfahrzeug 10 vorhanden ist, erfolgt ein dritter Verfahrensschritt 54. In dem dritten Verfahrensschritt 54 werden die UWB-Antennen 14, 16, 18, 20, 22, 24 abwechselnd zum Senden von UWB-Pulsen und empfangen der Impulsantworten und zum Durchführen von CIR-Messungen angesteuert.

In einem vierten Verfahrensschritt 56 wird der Außenbereich 26 des Kraftfahrzeugs 10 auf Basis der Ergebnisse der empfangenden Impulsantworten und der CIR-Messungen auf Personen überwacht. Ergibt der vierte Verfahrensschritt 56, dass sich keine Person in dem überwachten Außenbereich 26 des Kraftfahrzeugs 10 befindet, so kehrt das Verfahren zum dritten Verfahrensschritt 54 zurück.

Wird hingegen eine Person im überwachten Außenbereich 26 des Kraftfahrzeugs 10 erkannt, so wird überprüft, ob die Person authentifiziert ist. Dazu wird beispielsweise überprüft, ob Authentifizierungsdaten von der ermittelten Person mittels UWB- oder Bluetooth-Kommunikation an das Kraftfahrzeug 10 übermittelt wurden (fünfter Verfahrensschritt 58). Ist dies der Fall, so kehrt das Verfahren zum dritten Verfahrensschritt 54 zurück.

Ergibt der fünfte Verfahrensschritt 58 hingegen, dass keine Authentifizierungsdaten der ermittelten Person vorliegen, so wird ein Diebstahl- und Vandalismus-Schutz des Kraftfahrzeugs 10 aktiviert (sechster Verfahrensschritt 60). Hierzu wird ein Alarm an den authentifizierten Nutzer des Kraftfahrzeugs 10 unter Verwendung der Kommunikationsschnittstelle des Kraftfahrzeugs 10 ausgegeben und überprüft, ob die Fahrzeugtüren verriegelt sind. Ist dies nicht der Fall, wird die Zentralverriegelung zum Verriegeln der Fahrzeugtüren angesteuert.

Im aktivierten Diebstahl- und Vandalismus-Schutz des Kraftfahrzeugs 10 wird in Zeitabständen von 20 ms der dritte Verfahrensschritt 54 wiederholt, um zu überprüfen, ob die ermittelte Person den überwachten Außenbereich 26 des Kraftfahrzeugs 10 verlassen hat oder, ob eine andere Person den Außenbereich 26 betreten hat. Wird im aktivierten Diebstahl- und Vandalismus-Schutz erkannt, dass sich der Schließzustand der Fahrzeugtüren verändert hat, kehrt das Verfahren zum ersten Verfahrensschritt 50 zurück.

Im Falle, dass der zweite Verfahrensschritt 52 ergibt, dass mindestens eine Person in dem Kraftfahrzeug 10 erkannt wird, wird ein siebter Verfahrensschritt 62 durchgeführt. Beim siebten Verfahrensschritt 62 werden die UWB-Antennen 14, 16, 18, 20, 22, 24 abwechselnd zum Senden von UWB-Pulsen und empfangen der Impulsantworten und zum Durchführen von CIR-Messungen angesteuert und aus den Ergebnissen der empfangen Impulsantworten und CIR-Messungen überprüft, ob die in dem Kraftfahrzeug 10 ermittelte Person ein Kind oder ein Tier ist.

Ist dies nicht der Fall, so wird ein achter Verfahrensschritt 64 durchgeführt. Hierbei wird basierend auf den Ergebnissen der empfangenden Impulsantworten und der CIR-Messungen eine Sitzplatzbelegung des Kraftfahrzeugs 10 ermittelt und abhängig von der ermittelten Sitzplatzbelegung eine Innenraumüberwachung durchgeführt. Die Innenraumüberwachung erfolgt durch abwechselndes Ansteuern der UWB-Antennen 14, 16, 18, 20, 22, 24 zum Senden von UWB-Pulsen und empfangen der Impulsantworten und zum Durchführen von CIR-Messungen. Bei der Innenraumüberwachung werden verschiedene Funktionen, wie Sicherheitsgurtwarnungen, Airbagsteuerungen, eine Müdigkeitserkennung des Fahrers, Erkennungen von Atmungs- und/oder Herzfrequenzen der Personen im Fahrzeug zur Identifikation von Notfällen, eine Gestenerkennung zum Zwecke der Gestensteuerung, eine Fehlnutzungs-Erkennung und/oder dergleichen, durchgeführt. Dadurch, dass die genannten Funktionen unter Verwendung der UWB-Antennen 14, 16, 18, 20, 22, 24 und entsprechender Auswertung umgesetzt werden können, kann eine hohe Anzahl von Bauteilen, wie sie zur Erfüllung der verschiedenen Funktionen notwendig wären, wie verschiedenste Sensoren und Steuergeräte, eingespart werden. Insbesondere entfallen Ultraschall-Sensoren, Neigungssensoren und deren Steuergeräte zum Abtasten des Innenraums des Kraftfahrzeugs 10. Außerdem sind keine Sitzbelegungsmatten oder -sensoren zum Ermitteln der Sitzplatzbelegung und kein weiteres Steuergerät zur Steuerung von Sicherheitsgurtwarnungen und der Airbags erforderlich. Auch können die bei der Kindererkennung üblichen Radarsensoren, zum Beispiel 70 GHz Radarsensoren, eingespart werden. Wird in der aktivierten Innenraumüberwachung erkannt, dass sich der Schließzustand der Fahrzeugtüren verändert hat, kehrt das Verfahren zum ersten Verfahrensschritt 50 zurück.

Ergibt der siebte Verfahrensschritt 62 hingegen, dass die Person ein Kind oder ein Tier ist, welches alleine im Kraftfahrzeug 10 verweilt, so wird ein neunter Verfahrensschritt 66 durchgeführt. Hierbei wird ein Alarm mit der Information, dass ein Kind oder ein Tier im Kraftfahrzeug 10 zurückgelassen wurde, an den in dem Speicher hinterlegten Nutzer des Kraftfahrzeugs 10 unter Verwendung der Kommunikationsschnittstelle des Kraftfahrzeugs 10 ausgegeben. Hat sich der Schließzustand der Fahrzeugtüren verändert, so kehrt das Verfahren zum ersten Verfahrensschritt 50 zurück.

### Bezugszeichenliste

- 10: Kraftfahrzeug
- 12: Steuereinheit
- 14: erste UWB-Antenne
- 16: zweite UWB-Antenne
- 18: dritte UWB-Antenne
- 20: vierte UWB-Antenne
- 22: fünfte UWB-Antenne
- 24: sechste UWB-Antenne
- 26: Außenbereich des Kraftfahrzeugs
- 50: erster Verfahrensschritt
- 52: zweiter Verfahrensschritt
- 54: dritter Verfahrensschritt
- 56: vierter Verfahrensschritt
- 58: fünfter Verfahrensschritt
- 60: sechster Verfahrensschritt
- 62: siebter Verfahrensschritt
- 64: achter Verfahrensschritt
- 66: neunter Verfahrensschritt

## Patentansprüche

1. Verfahren zum Überwachen eines Kraftfahrzeugs (10), wobei das Kraftfahrzeug (10) ein Funksystem mit einem Sendeempfänger, mit einer ersten UWB-Antenne (14) und mit einer zweiten UWB-Antenne (16) und eine mit dem Funksystem verbundene Steuereinheit (12) aufweist, wobei die UWB-Antennen (14, 16) ferner zum Senden und Empfangen von Bluetooth-Funksignalen eingerichtet sind und das Funksystem ferner zum Aufbauen einer Bluetooth-Kommunikation eingerichtet ist, und das Verfahren die folgenden Schritte umfasst:
- Ansteuern des Funksystems zum Senden von UWB-Pulsen und Empfangen von Impulsantworten unter Verwendung von mindestens einer der beiden UWB-Antennen (14, 16), und
- Überwachen eines Außenbereichs (26) des Kraftfahrzeugs (10) auf Personen basierend auf einem Ergebnis der empfangenden Impulsantworten, und
- Aktivieren eines Diebstahl- und/oder Vandalismus-Schutzes des Kraftfahrzeugs (10) unter der Voraussetzung, dass eine Person im überwachten Außenbereichs (26) des Kraftfahrzeugs (10) ermittelt wurde.

2. Verfahren nach Anspruch 1, wobei das Aktivieren des Diebstahl- und/oder Vandalismus-Schutzes des Kraftfahrzeugs (10) die folgenden Schritte umfasst:
- Ausgeben eines Alarms,
- Ansteuern einer Zentralverriegelung des Kraftfahrzeugs (10) zum Abschließen des Kraftfahrzeugs (10), und/oder
- Erhöhen einer Abtastrate des Außenbereichs (26) des Kraftfahrzeugs (10) durch das Funksystem.

3. Verfahren nach einem der vorherigen Ansprüche, wobei das Aktivieren des Diebstahl- und/oder Vandalismus-Schutzes des Kraftfahrzeugs (10) ferner unter der Voraussetzung erfolgt, dass die im Außenbereich (26) des Kraftfahrzeugs (10) ermittelte Person an einem Einstiegs- oder Zugriffsbereichs des Kraftfahrzeugs (10) steht oder stehen bleibt.

4. Verfahren nach einem der vorherigen Ansprüche, wobei das Aktivieren des Diebstahl- und/oder Vandalismus-Schutzes des Kraftfahrzeugs (10) ferner unter der Voraussetzung erfolgt, dass die ermittelte Person keine authentifizierte Person ist.

5. Verfahren nach einem der vorherigen Ansprüche, wobei das Überwachen des Außenbereichs (26) des Kraftfahrzeugs (10) auf Personen ferner abhängig von einem Schließzustand der Türen des Kraftfahrzeugs (10) durchgeführt wird.

6. Verfahren nach einem der vorherigen Ansprüche, wobei basierend auf dem Ergebnis der empfangenden Impulsantworten eine Anzahl von Personen in dem Kraftfahrzeug (10) ermittelt wird und das Überwachen des Außenbereichs (26) des Kraftfahrzeugs (10) auf Personen unter der Voraussetzung durchgeführt, dass keine Person im Kraftfahrzeug (10) ist.

7. Verfahren nach Anspruch 6, wobei basierend auf dem Ergebnis der empfangenden Impulsantworten ermittelt wird, ob eine oder alle in dem Kraftfahrzeug (10) ermittelten Personen Kinder oder Tiere sind, wobei ein Alarm ausgegeben wird, wenn das oder die Kinder oder Tiere alleine im Kraftfahrzeug (10) sind.

8. Verfahren nach einem der Ansprüche 6 oder 7, wobei basierend auf dem Ergebnis der empfangenden Impulsantworten eine Sitzplatzbelegung des Kraftfahrzeugs (10) ermittelt wird und abhängig von der ermittelten Sitzplatzbelegung eine Innenraumüberwachung durchgeführt wird.

9. Verfahren nach einem der vorherigen Ansprüche, wobei ferner ein Ansteuern des Funksystems zum Durchführen eines auf Channel Impulse Response-(CIR-)Messungen basierenden Verfahrens unter Verwendung der ersten UWB-Antenne (14) und der zweiten UWB-Antenne (16) erfolgt und das Überwachen des Außenbereichs (26) des Kraftfahrzeugs (10) auf Personen ferner basierend auf einem Ergebnis der CIR-Messungen erfolgt.

10. Kraftfahrzeug (10), aufweisend:
- ein Funksystem mit einem Sendeempfänger, mit einer ersten UWB-Antenne (14) und einer zweiten UWB-Antenne (16), wobei die UWB-Antennen (14, 16) ferner zum Senden und Empfangen von Bluetooth-Funksignalen eingerichtet sind und das Funksystem ferner zum Aufbauen einer Bluetooth-Kommunikation eingerichtet ist, und
- eine mit dem Funksystem verbundene Steuereinheit (12), die dazu eingerichtet ist, das Verfahren nach einem der vorangehenden Ansprüche durchzuführen.
